**Europäisches Patentamt**

**European Patent Office**

**Office européen des brevets**

(19)

(11) Veröffentlichungsnummer: **0 052 163 B1**

(12) **EUROPÄISCHE PATENTSCHRIFT**

(45) Veröffentlichungstag der Patentschrift:
**10.10.84**

(21) Anmeldenummer: **80107738.9**

(22) Anmeldetag: **09.12.80**

(51) Int. Cl.³: **F 23 C 11/02, F 23 C 9/08**

(54) Verfahren zum Abschalten einer Wirbelschichtfeuerung für pulverisierte, feste Brennstoffe.

(30) Priorität: **13.11.80 CH 8427/80**

(43) Veröffentlichungstag der Anmeldung:
**26.05.82 Patentblatt 82/21**

(45) Bekanntmachung des Hinweises auf die Patenterteilung:
**10.10.84 Patentblatt 84/41**

(84) Benannte Vertragsstaaten:
**BE DE FR IT NL SE**

(56) Entgegenhaltungen:
**DE - A - 2 401 570**
**DE - A - 2 410 477**
**DE - A - 2 539 546**
**DE - A - 2 825 600**

(73) Patentinhaber: **GEBRÜDER SULZER AKTIENGESELLSCHAFT, Zürcherstrasse 9, CH-8401 Winterthur (CH)**

(72) Erfinder: **Brunner, Alfred, Dr., Wylandstrasse 21, CH-8400 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein Verfahren zum Abschalten einer Wirbelschichtfeuerung, die die im Oberbegriff des Anspruchs 1 genannten Merkmale aufweist. Eine solche Wirbelschichtfeuerung ist aus der DE-A1-2 825 600 bekannt. Die Rückführleitung dient hier zum Umwälzen von Luft während der Inbetriebnahme der Feuerung, wobei gleichzeitig ein heißes Medium, z. B. überhitzter Dampf, durch die Rohre der in der Wirbelschicht angeordneten Heizfläche geleitet wird, um die Wirbelschicht auf die Zündtemperatur zu bringen.

Soll eine solche Wirbelschichtfeuerung, beispielsweise infolge eines Ausfalls der Verbrennungsluft, aus vollem Betrieb abgeschaltet werden, so entsteht das Problem, daß wegen des im Brennstoffbett noch vorhandenen Restsauerstoffs das Bett sich unzulässig hoch erwärmen kann, so daß die das Bett begrenzenden Wände und/oder auch die Heizflächen Schaden leiden können und der Brennstoff beim anschließenden Abkühlen zusammensintern und eine verhältnismäßig feste, schwer entfernbare Masse bilden kann, die ein Wiederanfahren verunmöglicht oder doch verzögert.

Es ist Aufgabe der Erfindung, ein Verfahren für eine Wirbelschichtfeuerung der eingangs genannten Art zu schaffen, durch das ein Zusammensintern des Wirbelschichtmaterials bei Ausfall der Verbrennungsluftzufuhr vermieden wird. Diese Aufgabe wird erfindungsgemäß durch die Maßnahmen des Kennzeichens des Anspruchs 1 gelöst. Hierdurch wird es möglich, im Falle eines Ausfalls der Verbrennungsluft für das Brennstoffbett Rauchgas aus dem Rauchgaszug zu entnehmen und über die Rückführleitung in das Brennstoffbett zu leiten, so daß die Wirbelschicht erhalten bleibt und sich abkühlt, ohne daß die Brennstoffteilchen zusammenbacken können. Die erfindungsgemäße Lösung hat den besonderen Vorteil, daß sie sehr einfach im Betrieb ist und — abgesehen von bescheidenen Zusatzeinrichtungen — ohne Verwendung eines besonderen Mittels zum Löschen der Feuerung auskommt.

Aus der DE-A1-2 410 477 ist ein Verfahren zur Verbrennung von Industrieabfall, der organisch gebundenen Stickstoff enthält, in einem Wirbelschichtofen, der keine Heizflächen aufweist, bekannt. Dabei kann während des Normalbetriebes ein Teil des den Ofen verlassenden Abgases über eine Rückführleitung der der Wirbelschicht zuzuführenden Verbrennungsluft beigemischt werden. Zusammen mit einer oberhalb der Wirbelschicht angeordneten Sekundärluftzufuhr dient das bekannte Verfahren dazu, die Bildung von Stickstoffoxyden zu verringern.

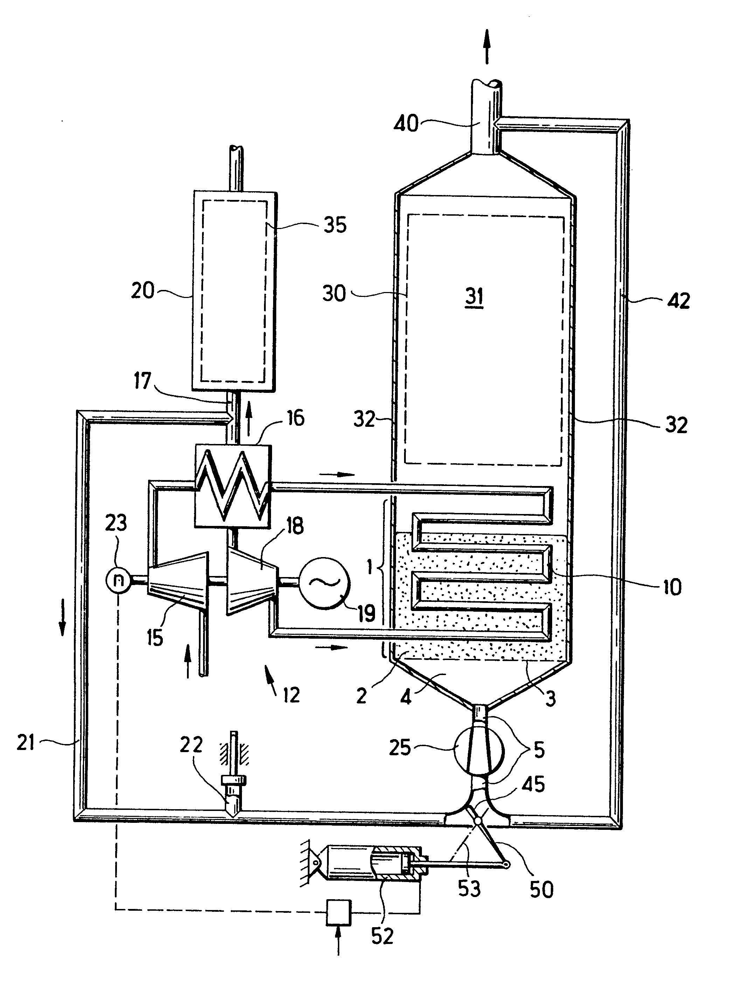

Das Verfahren nach der Erfindung wird in der folgenden Beschreibung an einer in der Zeichnung schematisch dargestellten Wirbelschichtfeuerung näher erläutert.

Eine kombinierte Heißluftturbinen-Dampfkraftanlage weist einen Verbrennungsraum 1 auf, in dem sich eine Wirbelschichtfeuerung 2 befindet, die aus einem Bett glühenden, festen, feinteiligen Brennstoffs besteht. Dieses Wirbelbett ist unten durch eine Lochplatte 3 begrenzt. Darunter befindet sich eine Luftverteilkammer 4, die über eine Leitung 5 mit Verbrennungsluft versorgt wird. Im Wirbelbett 2 ist eine Heizfläche 10 einer Heißluftturbinengruppe 12 eingetaucht. Diese Gruppe 12 besteht aus einem Verdichter 15 für Luft, einem Rekuperator 16, der schon genannten Heizfläche 10, einer Heißluftturbine 18, die mit dem Verdichter 15 und einem elektrischen Generator 19 auf einer gemeinsamen Welle angeordnet ist, und einem Abluftkessel 20. Es wird dabei ein geschlossener Strömungspfad gebildet, der vom Austritt des Frischluft ansaugenden Verdichters 15 zur Sekundärseite des Rekuperators 16 und weiter über die Heizfläche 10 zum Eintritt der Turbine 18 und dann über die Primärseite des Rekuperators 16 zum Abluftkessel 20 führt. Von der Verbindungsleitung 17 zwischen der Primärseite des Rekuperators 16 und dem Abluftkessel 20 zweigt eine Leitung 21 mit Sicherheitsventil 22 ab, die zur Leitung 5 führt. In der Leitung 5 ist ein Druckerhöhungsgebläse 25 angeordnet.

An den Verbrennungsraum 1 schließt sich nach oben ein Rauchgaszug 31 an, in dem Heizflächen 30 eines Dampferzeugers untergebracht sind, die durch ein gestrichelt gezeichnetes Rechteck angedeutet sind. Die Wände 32 des Verbrennungsraums 1 und des Rauchgaszuges 31 sind gekühlt und bilden Verdampferheizflächen des eben genannten Dampferzeugers. Weitere Dampferzeugerheizflächen 35 befinden sich im Abluftkessel 20, die durch ein gestrichelt gezeichnetes Rechteck angedeutet sind.

Der Rauchgaszug 31 ist an seinem oberen Ende eingezogen und mit einem Abzugkanal 40 versehen, der zu einem nicht gezeichneten Kamin führt.

Stromunterhalb der Heizflächen 30, zweigt vom Abzugskanal 40 eine Rückführleitung 42 ab, die im Bereich der Mündung der Leitung 21 ebenfalls in die Leitung 5 mündet. Im Bereich dieser beiden Mündungen ist eine Umschaltklappe 45 angeordnet, die wechselweise die Leitung 21 und die Rückführleitung 42 absperren kann.

Die Umschaltklappe 45 weist einen Betätigungshebel 50 auf, an dem ein Servomotor 52 angreift. Dieser Servomotor wird zum Beispiel von einem Drehzahlgeber 23 der Heißluftturbinengruppe 12 beeinflußt, und zwar in dem Sinne, daß die Umschaltklappe 45 in die gezeichnete Stellung gebracht wird, wenn die Drehzahl n unter einen bestimmten Schwellenwert absinkt. Im Normalbetrieb ist die Umschaltklappe 45 in der durch eine strichpunktierte Linie 53 angedeuteten Stellung, so daß die Rückführleitung 42 gegenüber der Leitung 5 abgesperrt ist.

Im Normalbetrieb wird Luft im Verdichter 15 verdichtet, im Rekuperator 16 erwärmt, in der Heizfläche 10 auf die Höchsttemperatur gebracht und in der Turbine 18 arbeitsleistend entspannt, wobei Überschußenergie im Generator 19 in elektrischen Strom umgewandelt wird. Die entspannte Luft wird im Rekuperator 16 gekühlt, wonach sie in zwei Ströme aufgeteilt wird. Ein Teilstrom gelangt in den Abluftkessel 20 und wird dort weiter abgekühlt; der andere Teilstrom gelangt über die Leitung 21 zum Druckerhöhungsgebläse 25. Die hier schwach verdichtete Luft strömt dann als Trag- und Verbrennungsluft über die Luftverteilkammer 4 in das Wirbelbett 2. Die in der Wirbelschicht entstehenden Verbrennungsgase werden an den Heizflächen 30 und den Wänden 32 abgekühlt und über den Abzugkanal 40 und den Kamin an die Umgebung abgegeben.

Ist die Umschaltklappe 45 in der strichpunktiert gezeichneten Normalbetriebsstellung genügend dicht, so erübrigt sich das Anbringen einer besonderen Rückschlagklappe in der Rückführleitung 42.

Tritt bei diesem Normalbetrieb eine Störung auf die zum Beispiel zu einem Abfall der Drehzahl der Heißluftturbinengruppe 12 und damit zu einer erheblichen Verschlechterung der Kühlung der Heizfläche 10 führt, so bewegt sich der Kolben des Servomotors 52 unter dem Einfluß des Signals des Drehzahlmeßgerätes 23 nach rechts in die gezeichnete Stellung, so daß dem Druckerhöhungsgebläse 25 und dem Wirbelbett 2 nicht mehr Verbrennungsluft, sondern Rauchgas über die Rückführleitung 42 zugeführt wird. Dadurch wird die Wärmeentbindung im Wirbelbett sofort gedrosselt.

Mit dem Umschalten kann das Eingeben eines Mengenerhöhungssignals oder eines fest eingestellten Sollwertes in eine nicht gezeichnete Regulierung des Druckerhöhungsgebläses 25 gekoppelt sein, so daß trotz der eventuell anderen Druckverhältnisse auf der Eingangsseite des Druckerhöhungsgebläses 25 dem Wirbelbett eine genügend große Rauchgasmenge zugeführt wird. Es wird dadurch vermieden, daß das Wirbelbett sich absetzt, bevor seine einzelnen Teilchen genügend tief abgekühlt sind. Damit wird ein Zusammensintern der Teilchen vermieden, und es wird auch verhindert, daß im Wirbelbett durch Bildung von Strömungskanälen eine ungleichmäßige Temperaturverteilung auftritt.

Es kann vorteilhaft sein, an der Rückführleitung 42 im Bereich des Abzugkanals 40 eine Rückschlagklappe anzuordnen, die im Normalbetrieb das Eindringen von Rauchgas in die Rückführleitung verhindert, das sonst zu Korrosionen in dieser Leitung führen könnte. Überdies kann in dem dem Abzugkanal gegenüberliegenden Bereich einer solchen Rückschlagklappe eine kleine Austrittsöffnung vorgesehen sein, die zusammen mit einer Undichtheit an der Umschaltklappe 45 im Normalbetrieb eine ständige Spülung der Rückführleitung 42 mit sauberer Verbrennungsluft bewirkt.

Es kann dagegen — falls das Rauchgas weniger zu Korrosionsangriff neigt — auch zweckmäßig sein, die Rückführleitung 42 ständig von einer Minimalmenge des Rauchgases durchströmen zu lassen, damit im Falle einer Umschaltung der Umschaltklappe dem Wirbelbett das Rauchgas möglichst rasch zugeführt wird. Um eine solche Spülung mit Rauchgas ohne zusätzlichen Spülventilator zu verwirklichen, ist beispielsweise die Rückführleitung 42 an der Außenseite des als Krümmer ausgebildeten Abzugkanals 40 angeschlossen; ferner wird eine zusätzliche Verbindungsleitung vorgesehen, die von der Rückführleitung 42 nahe der Umschaltklappe 45 ausgeht und zur Innenseite des erwähnten Krümmers führt.

Der Servomotor 52 kann — statt von der Drehzahl des Gebers 23 — auch beispielsweise von der Durchflußmenge der Heizfläche 10 oder von der Temperatur der die Heizfläche 10 verlassenden Luft beeinflußt sein.

An Stelle der gezeichneten Umschaltklappe 45 können auch zwei einfache Abschlußklappen oder eine Abschlußklappe und eine Rückschlagklappe angeordnet werden. Es kann auch zusätzlich zur Umschaltklappe 45 oder an Stelle von dieser eine gleiche Klappe im Bereich der Abzweigung der Rückführleitung 42 vorgesehen sein.

An Stelle der beschriebenen Umschaltung mit vollständiger Absperrung von Luft oder Rauchgas kann die Klappe 45 auch so gestellt werden, daß eine dosierte Zufuhr von Rauchgas zur Verbrennungsluft stattfindet. Dies kann weitere Vorteile während des Normalbetriebs bringen, indem zum Beispiel die Wirbelschichttemperatur, die Betthöhe, der $CO_2$- oder der $NO_x$-Gehalt des Rauchgases beeinflußt werden kann.

## Patentansprüche

1. Verfahren zum Abschalten einer Wirbelschichtfeuerung für pulverisierte, feste Brennstoffe, wobei zur unteren Begrenzung der Wirbelschicht (2) ein Lochboden (3) vorgesehen ist, an dem eine Luftverteilkammer (4) mit einem Luftzufuhrkanal (5) angeschlossen ist, wobei sich stromunterhalb der Wirbelschicht (2) ein mehrere Heizflächen (30) aufweisender Rauchgaszug (31) anschließt, von dem stromunterhalb dieser Heizflächen (30) eine Rückführleitung (42) für Rauchgas abzweigt, die an einer Stelle stromoberhalb der Luftverteilkammer (4) in die Luftzufuhr mündet, und wobei im Pfad (21) der Luftzufuhr stromoberhalb der Mündung der Rückführleitung (42) und im Pfad des Rauchgases stromunterhalb der Abzweigung der Rückführleitung (42) je ein Absperrorgan (50) vorgesehen ist, dadurch gekennzeichnet, daß zum Abschalten der Wirbelschichtfeuerung (2) unter Absperrung der Luftzufuhr zur Luftverteilkammer (4) Rauchgas über die Rückführleitung (42) und die Luftverteilkammer (4) der Wirbelschicht (2) so lange zugeführt wird, bis die in der Wirbelschicht befindlichen Teilchen genügend abgekühlt sind und nicht mehr zusammenbacken können.

2. Verfahren nach Anspruch 1, mit einer Heißlufturbinengruppe (15, 18) für die Luftzufuhr, dadurch gekennzeichnet, daß das Umschalten von Luftzufuhr auf Rauchgaszufuhr in Abhängigkeit von der Drehzahl der Heißtluftturbinengruppe (15, 18) erfolgt.

## Claims

1. A method of shutting down a fluidized bed furnace for pulverized solid fuels, a perforate tray (3) being provided as the bottom boundary of the fluidized bed (2) and being connected to an air distribution chamber (4) having an air supply duct (5), a smoke gas flue (31) being disposed downstream of the fluidized bed (2) and having a plurality of heating surfaces (30), downstream of which a recycle pipe (42) for smoke gas branches off and leads into the air supply at a place upstream of the air distribution chamber (4), valve means (50) being provided one in the path (21) of the air supply upstream of the orifice of the recycle pipe (42) and one in the path of the smoke gas downstream of the branch-off of the recycle pipe (42), characterised in that for the purpose of shutting down the fluidized bed furnace (2), with the air supply to the air distribution chamber (4) being shut off, smoke gas is fed via the recycle pipe (42) and the air distribution chamber (4) to the fluidized bed (2) until the particles in the fluidized bed have cooled sufficiently and can no longer cake.

2. A method according to claim 1, having a hot-air turbine group (15, 18) for the air supply, characterised in that the change-over from air supply to smoke gas supply is effected in dependence on the speed of the hot-air turbine group (15, 18).

## Revendications

1. Procédé de mise hors service d'un foyer à couche turbulente pour combustibles solides pulvérisés, la délimitation inférieure de la couche turbulente (2) étant assurée par un fond perforé (30) auquel est raccordée une chambre (4) répartitrice d'air munie d'un canal (5) d'admission d'air, la couche turbulente (2) se raccordant en aval à une cheminée (31) à gaz de fumée qui comporte plusieurs surfaces de chauffe (30) et dont bifurque, en aval de ces surfaces de chauffe (30), un conduit (42) de retour des gaz de fumée qui débouche dans le conduit d'admission d'air en un endroit situé en amont de la chambre (4) répartitrice d'air, un organe respectif d'isolement (50) étant prévu dans le trajet (21) d'admission d'air en amont de l'embouchure du conduit de retour (42) et dans le trajet des gaz de fumée en aval de la bifurcation dudit conduit de retour (42), caractérisé par le fait que, pour mettre le foyer à couche turbulente (2) hors service en bloquant l'admission d'air dans la chambre (4) répartitrice d'air, des gaz de fumée sont délivrés à la couche turbulente (2), par l'intermédiaire du conduit de retour (42) et de la chambre (4) répartitrice d'air, jusqu'à ce que les particules situées dans ladite couche turbulente soient suffisamment refroidies et ne puissent plus s'agglutiner.

2. Procédé selon la revendication 1, comportant un groupe (15, 18) à turbine à air chaud pour l'admission d'air, caractérisé par le fait que la commutation de l'admission d'air à l'admission de gaz de fumée a lieu en fonction de la vitesse de rotation du groupe (15, 18) à turbine à air chaud.